# EUROPEAN PATENT APPLICATION

(11) **EP 3 242 113 A1**
(43) Date of publication of application: **08.11.2017**
(21) Application number: 16168361.0
(22) Date of filing: 04.05.2016
(51) Int. Cl.: G01G 13/24, B65B 1/32, G01F 13/00, G05D 7/06

(54) **SYSTEM AND METHOD FOR DOSING POWDER OR GRAIN IN A BATCH PROCESS**

(71) Applicant: Tetra Laval Holdings & Finance S.A., 1009 Pully (CH)
(72) Inventor: SKOGLUND, Tomas, 22654 LUND (SE)
(74) Representative: Tetra Pak - Patent Attorneys SE

(57) **Abstract**

The present invention relates to a system (100) for dosing powder or grain in a batch process. The system (100) comprises: a continuously variable feeder (104) connected to a supply (102) of powder or grain for supplying powder or grain from the supply to a batch target (106), weight measuring means (108) for measuring the weight of the supply (102), and a proportional controller (110), or a proportional and derivative controller, connected to the continuously variable feeder (104) and the weight measuring means. The proportional controller (110) controls the continuous variable feeder (104) on the basis of a weight signal from the weight measuring means such that the batch target (106) reaches a predetermined weight. The proportional controller (110) may further comprise a derivative component.

## Description

### Technical field

The present invention generally relates to the field of systems and methods for dosing powder or grain in a batch process.

### Background art

Feeder systems are commonly used to disperse batches of products such as powder and grain to a target. In particular, for loss in weight systems it is common to use a continuously variable feeder such that the speed of feeding can be high at the start of the action, and whereas the speed can be lowered during the final stages of the weighing process. This change in the speed of feeding is executed in order to improve accuracy such that a predetermined weight of the batch is neither exceeded nor undercut. By achieving a more accurate weight of each batch, losses of both material and money is being reduced for the producer since no excess material will be distributed and/or used for further processing. Moreover, a more accurate weight will ensure the customer that they receive and pay for the correct amount of gods. Naturally, a high speed of feeding with a sufficient accuracy is needed to provide a large number of batches during production. Therefore, a slow feeding speed cannot be used throughout the process to achieve accuracy.

Typically, computer based control systems having a software module are used with specific algorithms to adapt the speed of feeding. Hence, sensors, non-transistory memory and at least one processor are needed to accurately weigh a batch in the process and further electrical actuators which adjust the continuously variable speed of the feeder. Accordingly, this solution is complex, expensive and has several components which require maintenance and moreover this solution may be difficult to troubleshoot.

Hence, there is a desire to improve the state of the art to provide a system for dosing powder or grain in a batch process using a feeder with a continuously variable speed in order to achieve improved accuracy during a fast and robust weighing process. Further, such a system should preferably offer a reduced complexity and cost compared to prior art systems.

### Summary of the invention

It is an object of the present invention to improve the current state of the art, to alleviate at least some of the above mentioned problems, and to provide an improved system for dosing powder and/or grain in a batch process.

According to a first aspect of the invention a system for dosing powder or grain in a batch process is provided. The system comprises:
- a continuously variable feeder connected to a supply of powder or grain for supplying powder or grain from the supply to a batch target;
- weight measuring means for measuring the weight of the supply;
- a proportional controller connected to the continuously variable feeder and the weight measuring means; and
wherein the proportional controller controls the continuous variable feeder on the basis of a weight signal from the weight measuring means such that the batch target reaches a predetermined weight.

The present invention is based on the realization that it is possible to provide a system where a proportional controller is used to control the speed of a continuously variable feeder which results in a simple and cheap system for fast, accurate and robust dosing of powder or grain to a predetermined weight. A batch process is not suitable for being controlled by a controller with an integrating term (PI or PID-controller), which is typically used for continuous process, since there is no measured value that should be kept over time. The integrating part of such a controller stabilizes a value over time independent of the current loading of the process. Therefore a proportional, integrating controller (PI controller) or a proportional, integrating and derivative controller (PID controller) would not work in a batch process where you repeatedly go from zero up to a predetermined weight. When a batch target has reached a predetermined weight, decided by the loss of weight from the supply, that batch target is moved away and the next batch target is ready to be filled with powder and/or grain. Hence, for a batch process it is important to ensure that the predetermined weight is reached fast and with high accuracy and that all batches in a series reaches the predetermined weight with the same speed and accuracy. The later is what define a robust process. Typically, other algorithms have been used for controlling the speed of feeding in these batch processes. These algorithms are in need of computer based systems with sensors, non-transistory memory and at least one processor. Further, electrical actuators are needed to accurately weigh a batch in the process. All these components of the computer based control system results in a complex and expensive system which may need complicated maintenance. The inventor realized that the use of a proportional controller (P-controller), or a proportional and derivative controller (PD-controller) continuously reduces the speed in order to achieve a more robust and accurate measurement. In comparison, the algorithms typically used for a batch process reduces the speed stepwise. The use of a proportional controller, or PD-controller, results in a faster, more accurate and more robust control of the feeding of powder or grain to a batch target. Further, a P-controller (or PD-controller) is cheap and simple to utilize.

The feeder may be used to feed powder and/or grain into a batch target. The feeder can be used for different types of powders and/or different types of grains.

The speed of the feeder is typically continuously variable. The use of a continuously variable feeder means that the speed of the feeder can be set to any value between a maximum speed and a minimum speed, or full stop. Hence, the speed of the feeder is not being adjusted stepwise. According to at least one example embodiment of the invention the feeder can be a screw-type feeder. Further, the powder and/or grain may be fed to a batch target by the means of a rotary valve.

The system herein described may be known as a loss in weight systems, i.e. a system where the reduced weight of the supply is measured instead of measuring the weight of the batch target. Each batch is thus created in the batch target, which may be a container, and which may also receive other types of powders, grains or even fluids which in turn may be measured by other systems.

According to at least one exemplary embodiment, the weight measuring means is a strain gauge or a capacitive load cell. The weight measuring means may be configured to send a weight signal to the controller, which adjusts the speed of the feeder based on the weight signal. The weight measuring means may be arranged to reduce unnecessary disturbance of the weighing process.

According to at least one example embodiment the predetermined weight is the target weight for each batch. The predetermined weight may be any suitable weight in the range of 0.1 kg to 1000 kg.

According to at least one example embodiment of the invention the batch target can be a reaction vessel. It may for example be a powder mixer. Moreover, according to at least one example embodiment of the invention the batch target may be various kinds of containers.

According to at least one exemplary embodiment, the proportional controller further comprises a derivative component. Stated differently, the controller may be a proportional and derivative controller (PD-controller). The derivative part of the controller acts as a predictor. This means that the speed of the feeder may be decreased prior to reaching the predetermined weight, and thus function as an overshoot compensation. Overshoot means a weight which is above the predetermined weight. Moreover, the overshot compensation may guarantee that the batch target neither exceeds nor undercuts the predetermined weight to a substantial amount. Here, a substantial amount being at least a difference of 0.5-1.5 % of the total weight of the batch target.

The derivative part of the controller may also function to as a predictor for taking into account the type of powder and grain into account when adjusting the speed of the feeder. Moreover, the derivative part of the controller may also take any coating that may be present on the feeder into account for adjusting the speed of the feeder. In other words, the derivative part of the controller may act as an overshot compensation.

According to at least one exemplary embodiment, the system further comprises a ramp function connected to the proportional controller. The ramp function sets the predetermined weight to a ramp function instead of a step function such that the proportional controller can provide a larger gain without undesired fluctuations in the speed of the feeder.

According to at least one exemplary embodiment, the ramp function may be embedded in an electric ramp function or software ramp function for the weight signal. In other words, the ramp function may be embodied in an electric circuit connected to the proportional controller (or PD-controller).

According to at least one exemplary embodiment, the system further comprises means for overshot compensation. The overshot compensation is used in-order to achieve an improved accuracy of the dosing. Moreover, the overshot compensation may guarantee that the batch target neither exceeds nor undercuts the predetermined weight to a substantial amount. Here, a substantial amount being at least a difference of 0.5-1.5 % of the total weight of the batch target.

According to at least one exemplary embodiment, the system further comprises adjustment means for adjusting the speed of the continuously variable feeder to adjust for differences in feeding powder or grain. The adjustment means is used in order to adjust the system according to the type of grain or the type of powder that is used. Stated differently, the flow characteristics of powder through the continuously variable feeder are different from the flow characteristics of grain through the continuously variable feeder. The adjustment means may therefore adjust the speed of the continuously variable feeder to account for such a difference. To provide such an adjustment either the amplification in the proportional controller may be adjusted, or the actuation of the continuously variable feeder may be adjusted such that the speed of the feeder is appropriately adjusted. By utilizing a PD-controller, these adjustments are in principle made automatically by the derivative part.

According to a second aspect of the invention a method for dosing powder or grain in a batch process is provided. The method comprises the steps of:
- continuously measuring the weight of a supply using weight measuring means to provide a weight signal indicative of the weight of the supply;
- controlling a continuously variable feeder connected to the supply of powder or grain using a proportional controller connected to the continuously variable feeder based on the weight signal such that a batch target reaches a predetermined weight.

Effects and features of this second aspect of the present invention are largely analogous to those described above in connection with the first aspect of the inventive concept. Embodiments mentioned in relation to the first aspect of the present invention are largely compatible with the second aspect of the invention.

According to at least one exemplary embodiment, the method further comprises the step of providing a derivative component for said proportional controller.

According to at least one exemplary embodiment, the method further comprises the step of providing a ramp function for the proportional controller.

According to at least one exemplary embodiment, the method further comprises the step of providing an overshot compensation for the proportional controller.

According to a third aspect of the invention a system for dosing powder or grain in a batch process is provided. The system comprises:
- a continuously variable feeder connected to a supply of powder or grain for supplying powder or grain from the supply to a batch target;
- weight measuring means for measuring the weight of the batch target;
- a proportional controller connected to the continuously variable feeder and the weight measuring means; and
wherein the proportional controller controls the continuous variable feeder on the basis of a weight signal from the weight measuring means such that the batch target reaches a predetermined weight.

Effects and features of this third aspect of the present invention are largely analogous to those described above in connection with the first aspect of the inventive concept. Embodiments mentioned in relation to the first aspect of the present invention are largely compatible with the third aspect of the invention.

The feeder may be used to feed powder and/or grain into a batch target. The feeder can be used for different types of powders and/or different types of grains.

The speed of the feeder is typically continuously variable. The use of a continuously variable feeder means that the speed of the feeder can be set to any value between a maximum speed and a minimum speed, or full stop. Hence, the speed of the feeder is not being adjusted stepwise. According to at least one example embodiment of the invention the feeder can be a screw-type feeder. Further, the powder and/or grain may be fed to a batch target by the means of a rotary valve.

The system herein described as the third aspect may be known as a gaining weight system, i.e. a system where the increased weight of the batch target is measured instead of measuring the weight of the supply. Each batch is thus created in the batch target, which may be a container, and which may also receive other types of powders, grains or even fluids which in turn may be measured by other systems.

According to at least one exemplary embodiment, the weight measuring means is a strain gauge or a capacitive load cell. The weight measuring means may be configured to send a weight signal to the controller, which adjusts the speed of the feeder based on the weight signal. The weight measuring means may be arranged to reduce unnecessary disturbance of the weighing process.

According to at least one example embodiment the predetermined weight is the target weight for each batch. The predetermined weight may be any suitable weight in the range of 0.1 kg to 1000 kg.

According to at least one example embodiment of the invention the batch target can be a reaction vessel. It may for example be a powder mixer. Moreover, according to at least one example embodiment of the invention the batch target may be various kinds of containers.

According to at least one exemplary embodiment, the proportional controller further comprises a derivative component. Stated differently, the controller may be a proportional and derivative controller (PD-controller). The derivative part of the controller acts as a predictor. This means that the speed of the feeder may be decreased prior to reaching the predetermined weight, and thus function as an in-flight compensation and/or overshoot compensation. Overshoot means a weight which is above the predetermined weight. In-flight compensation occurs as there may be powder or grain being in transport between the feeder or the batch target, for example falling due to gravity which is not yet recognized and measured by the weight measuring means. Hence, this is a difference between the first and third aspect of the invention, as the first aspect may not require any in-flight compensation. Moreover, the overshot compensation and/or in-flight compensation may guarantee that the batch target neither exceeds nor undercuts the predetermined weight to a substantial amount. Here, a substantial amount being at least a difference of 0.5-1.5 % of the total weight of the batch target.

The derivative part of the controller may also function to as a predictor for taking into account the type of powder and grain into account when adjusting the speed of the feeder. Moreover, the derivative part of the controller may also take any coating that may be present on the feeder into account for adjusting the speed of the feeder. In other words, the derivative part of the controller may act as an overshot compensation.

According to at least one exemplary embodiment, the system further comprises a ramp function connected to the proportional controller. The ramp function sets the predetermined weight to a ramp function instead of a step function such that the proportional controller can provide a larger gain without undesired fluctuations in the speed of the feeder.

According to at least one exemplary embodiment, the ramp function may be embedded in an electric ramp function or software ramp function for the weight signal. In other words, the ramp function may be embodied in an electric circuit connected to the proportional controller (or PD-controller).

According to at least one exemplary embodiment, the system further comprises means for overshot compensation and/or in-flight compensation. The overshot and/or in-flight compensation is used in-order to achieve an improved accuracy of the dosing. Moreover, the overshot compensation and/or in-flight compensation may guarantee that the batch target neither exceeds nor undercuts the predetermined weight to a substantial amount. Here, a substantial amount being at least a difference of 0.5-1.5 % of the total weight of the batch target.

According to at least one exemplary embodiment, the system further comprises adjustment means for adjusting the speed of the continuously variable feeder to adjust for differences in feeding powder or grain. The adjustment means is used in order to adjust the system according to the type of grain or the type of powder that is used. Stated differently, the flow characteristics of powder through the continuously variable feeder are different from the flow characteristics of grain through the continuously variable feeder. The adjustment means may therefore adjust the speed of the continuously variable feeder to account for such a difference. To provide such an adjustment either the amplification in the proportional controller may be adjusted, or the actuation of the continuously variable feeder may be adjusted such that the speed of the feeder is appropriately adjusted. By utilizing a PD-controller, these adjustments are substantially made automatically by the derivative part.

According to a fourth aspect of the invention a method for dosing powder or grain in a batch process is provided. The method comprises the steps of:
- continuously measuring the weight of a batch target using weight measuring means to provide a weight signal indicative of the weight of the batch target;
- controlling a continuously variable feeder connected to a supply of powder or grain using a proportional controller connected to the continuously variable feeder based on the weight signal such that the batch target reaches a predetermined weight.

Effects and features of this fourth aspect of the present invention are largely analogous to those described above in connection with the first, second or third aspect of the inventive concept. Embodiments mentioned in relation to the first, second or third aspects of the present invention are largely compatible with the fourth aspect of the invention.

According to at least one exemplary embodiment, the method further comprises the step of providing a derivative component for said proportional controller.

According to at least one exemplary embodiment, the method further comprises the step of providing a ramp function for the proportional controller.

According to at least one exemplary embodiment, the method further comprises the step of providing an overshot compensation and/or in-flight compensation for the proportional controller.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 is a schematic side view of a system in accordance with one embodiment of the present invention;
Figs. 2A-C are graphs showing the results of a measurement for a sequence of 16 batches in accordance with one embodiment of the present invention;
Fig. 3 is a flowchart schematically illustrating the steps of a method in accordance with at least one embodiment of the invention; and
Fig. 4 is a schematic side view of a system in accordance with one embodiment of the present invention.

### Detailed description of preferred embodiments of the invention

In the present detailed description, embodiments of a system for dosing powder or grain in a batch process are discussed. It should be noted that this by no means limits the scope of the invention, which is also applicable in other circumstances for instance with other types or variants of systems for dosing powder or grain shown in the appended drawings. Further, that specific components are mentioned in connection to an embodiment of the invention does not mean that those components cannot be used to an advantage together with other embodiments of the invention.

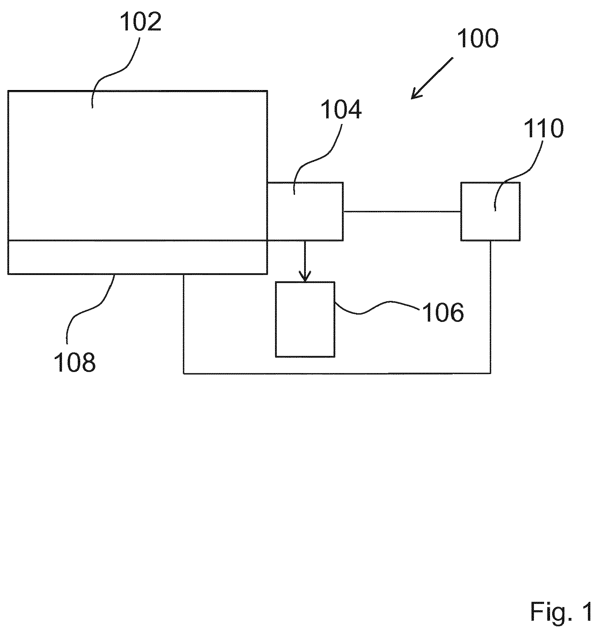

Fig. 1 shows a schematic side view of an exemplary loss in weight system 100 for dosing powder or grain for a batch process. The system 100 comprises a supply 102, a continuously variably feeder 104, a batch target 106, weight measuring means 108 and a control unit 110.

The supply 102 may for example be a container for the powder or grain that should be fed to the batch target 106. Moreover, the supply 102 may have an opening in the bottom providing powder and/or grain to the continuously variable feeder 104.

The continuously variable feeder 104 may for example be a screw-type feeder or it can be a rotary valve. Alternatively, the feeder 104 may be transport line, e.g. a pipe or belt having a continuous flow of powder and/or grain. The continuously variable feeder 104 may further comprise a valve which completely shuts of flow, such that very easily flowing powders or grains are stopped from leaking when operation is halted. The screw-type feeder is typically connected to a driving means which are rotating the screw clockwise or counter- clockwise. The speed of the continuously variable feeder 104 may be set by the rotation speed, i.e. turns per time unit, of the screw. The driving means may be an electric motor which is controlled by the control unit 110.

In Fig. 1 the continuously variable feeder 104 is schematically shown outside the supply 102. Alternatively, the continuously variable feeder 104 may be arranged at least partially or wholly arranged within the supply 102 to facilitate the powder or grain from reaching the continuously variable feeder 104.

The weight measuring means 108 may be a strain gauge or a capacitive load cell which measures the weight of the supply 102. The weight measuring means 108 is schematically shown below the supply 102 in Fig. 1. The weight measuring means 108 are thus arranged to measure the weight of the supply 102. However, it is of course possible that the weight measuring means 108 is arranged differently to measure the weight of the supply 102, for example supporting the weight of the supply 102 hanging from the weight measuring means 108.

The control unit 110 comprises a proportional controller. The control unit 110 is an electric unit which is connected to the continuously variable feeder 104 and the weight measuring means 108 either wired or wireless. Further, the control unit 110 may include a ramp-function, an overshot compensation and or an in-flight compensation to improve the function of the proportional controller. Moreover, a derivative component may be added to the controller, such that the control unit 110 comprises a proportional and derivative controller (PD-controller).

The supply 102 is connected to the continuously variable feeder 104. The connection may be at an opening in the bottom of the supply 102. Further, the variable feeder 104 can be connected to the belt or pipe providing powder and/or grain. The batch target 106 may be placed underneath the feeder such that powder or grain passing through the continuously variable feeder 104 falls due to the force of gravity (as indicated by the arrow in Fig. 1) into the batch target 108. The weight measuring means 108 is arranged to measure the weight of the supply 102.

During operation, the powder or grain reaches the bottom of the supply 102, where the opening is situated, via the means of gravity. The continuously variable feeder 104 transports the powder or grain from the supply 102 to a batch target 106. The supply 102 is continuously weighed during feeding. The control unit 110, connected to both the weight measuring means 108 and the continuously variable feeder 104, receives a weight signal from the weight measuring means 108 and compares the current weight of the supply with the previous weight of the supply before the feeding to the batch target 106 began in order to output a control signal to the continuously variable feeder 104. Hence, when the predetermined weight of the batch target 106 is reached, determined by the control unit 110 as the reduced weight of the supply 102, the control unit 110 stops the variable feeder 104. The speed of the continuously variable speeder is controlled between a maximum and a minimum speed, or full stop.

Subsequently, the batch target 106 may be replaced by a new batch target 106. The weight measuring means 108 may be calibrated in between two batches.

The use of a proportional controller in the control unit 110 may be improved by either:
i) Providing a proportional and derivative controller instead of the proportional controller. By the use of a proportional and derivative controller neither the ramp-function nor the overshot compensation is necessary in order to improve the accuracy. A proportional and derivative controlled system may give a shorter weighing time than the proportional controlled system using a ramp-function; or
ii) Adding a ramp-function and overshot compensation to the proportional controller to provide a more accurate weight.

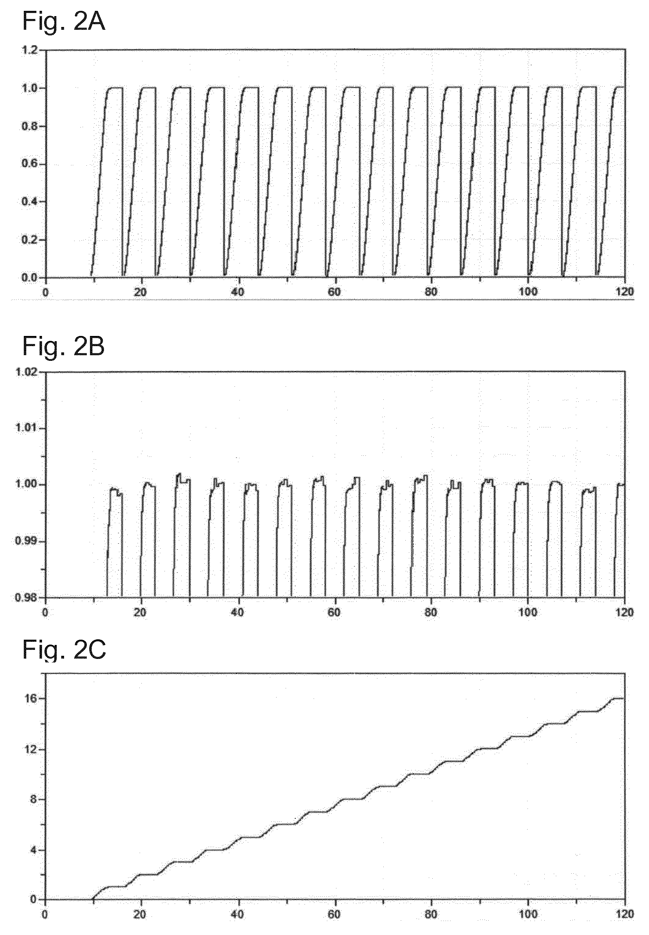

Fig. 2A-C shows a sequence of measurements of weighing of 16 batches where a proportional controller is used together with a ramp-function and overshot compensation. Similar results can also be achieved with a proportional and derivative controller. The horizontal axis of the graphs shows the time in seconds and the vertical axis shows the weight in kg. The predetermined weight for all 16 batches was 1 kg. Fig. 2A-B shows the weight for each batch. Fig. 2B is expanded around 1 kg in order to show how accurate and robust the system is. Fig. 2C is the accumulated weight for all 16 batches. As seen in the graphs the controller provides an accurate system for dosing powder and/or grain since the weight of each batch is very close to the predetermined weight of 1 kg. Moreover, the system is shown to be very robust since all the 16 batches achieving the correct weight with the same accuracy.

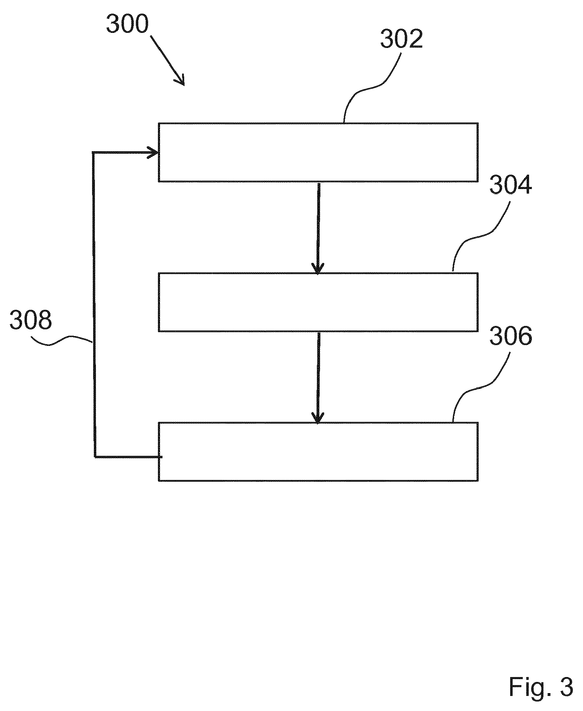

Fig. 3 shows an exemplary method 300 for dosing powder and/or grain in a batch process. An appropriate system for performing the method is described in connection with Fig. 1 above. It is understood that other systems than the one described above may be used to perform this exemplary method.

The first step 302 comprises providing powder and/or grain from a supply connected to a continuously variable feeder. The powder and/or grain may reach the continuously variable feeder via the means of gravity if the continuously variable feeder is connected to the bottom of the supply. In the next step 304, the weight of the supply is continuously measured by weight measuring means which generates a weight signal. The weight signal indicates the current weight of the supply.

The next step 306 comprises receiving the weight signal in a control unit comprising a proportional controller or proportional and derivative controller and comparing the weight signal to a predetermined weight of the batch target, thereby causing the proportional controller to generate a control signal to the continuously variable feeder. Stated differently, the weight signal is before the actuation of the feeder starts is used to determine to which extent the weight of the supply is to decrease for the batch target to reach the predetermined weight. The control signal generated by the proportional controller actuates the continuously variable feeder to feed grain or powder to the batch target such that the batch target reaches the predetermined weight which is determined by the decreasing weight of the supply.

After a first batch has reached the predetermined weight, there is subsequently an optionally step (not shown) of removing the batch target. The steps may be repeated for a new batch target as indicated by the arrow 308.

It is of course understood that variations to the shown embodiment may be effected and still be within the scope of the invention, for example the continuously variable feeder may be controlled, actuated or operated using pneumatic, electric or hydraulic means. Further, the continuously variable feeder may be any continuously variable feeder known in the art.

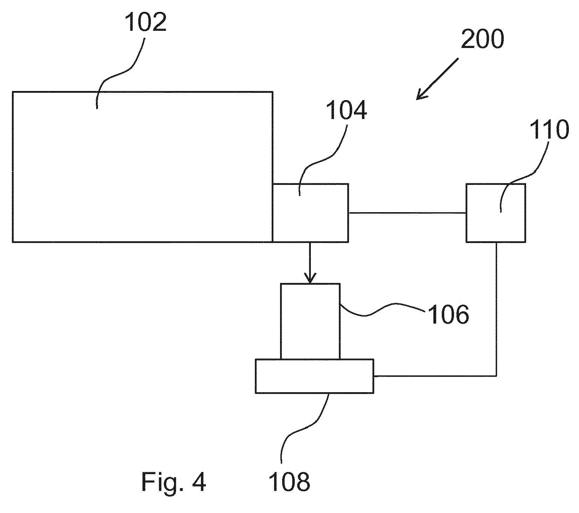

Fig. 4 shows a system 200 which is similar to the system 100 shown if Fig. 1, however, in the system 200 the weight of the batch target is measured instead of the weight of the supply 102.

The system 200 comprises a supply 102, a continuously variably feeder 104, a batch target 106, weight measuring means 108 and a control unit 110.

The supply 102 may for example be a container for the powder or grain that should be fed to the batch target 106. Moreover, the supply 102 may have an opening in the bottom providing powder and/or grain to the continuously variable feeder 104.

The continuously variable feeder 104 may for example be a screw-type feeder or it can be a rotary valve. Alternatively, the feeder 104 may be transport line, e.g. a pipe or belt having a continuous flow of powder and/or grain. The continuously variable feeder 104 may further comprise a valve which completely shuts of flow, such that very easily flowing powders or grains are stopped from leaking when operation is halted. The screw-type feeder is typically connected to a driving means which are rotating the screw clockwise or counter- clockwise. The speed of the continuously variable feeder 104 may be set by the rotation speed, i.e. turns per time unit, of the screw. The driving means may be an electric motor which is controlled by the control unit 110.

In Fig. 4 the continuously variable feeder 104 is schematically shown outside the supply 102. Alternatively, the continuously variable feeder 104 may be arranged at least partially or wholly arranged within the supply 102 to facilitate the powder or grain from reaching the continuously variable feeder 104.

The weight measuring means 108 may be a strain gauge or a capacitive load cell which measures the weight of the batch target 106. The weight measuring means 108 is schematically shown below the batch target 106 in Fig. 4. The weight measuring means 108 is thus arranged to measure the weight of the batch target 106. However, it is of course possible that the weight measuring means 108 is arranged differently to measure the weight of the batch target 106, for example supporting the weight of the batch target 106 hanging from the weight measuring means 108. The weight measuring means 108 may include a plate, belt or other type or support structure for supporting the batch target 106.

The control unit 110 comprises a proportional controller. The control unit 110 is an electric unit which is connected to the continuously variable feeder 104 and the weight measuring means 108 either wired or wireless. Further, the control unit 110 may include a ramp-function, an overshot compensation and or an in-flight compensation to improve the function of the proportional controller. Moreover, a derivative component may be added to the controller, such that the control unit 110 comprises a proportional and derivative controller (PD-controller).

The supply 102 is connected to the continuously variable feeder 104. The connection may be at an opening in the bottom of the supply 102. Further, the variable feeder 104 can be connected to the belt or pipe providing powder and/or grain. The batch target 106 may be placed underneath the feeder such that powder or grain passing through the continuously variable feeder 104 falls due to the force of gravity (as indicated by the arrow in Fig. 4) into the batch target 108. The weight measuring means 108 is arranged to measure the weight of the supply 102.

During operation, the powder or grain reaches the bottom of the supply 102, where the opening is situated, via the means of gravity. The continuously variable feeder 104 transports the powder or grain from the supply 102 to a batch target 106. The batch target 106 is continuously weighed during feeding. The control unit 110, connected to both the weight measuring means 108 and the continuously variable feeder 104, receives a weight signal from the weight measuring means 108 and compares the current weight of the batch target with the previous weight of the batch target in order to output a control signal to the continuously variable feeder 104. Hence, when the predetermined weight of the batch target 106 is reached, determined by the control unit 110 as the weight of the batch target 106, the control unit 110 stops the variable feeder 104. The speed of the continuously variable speeder is controlled between a maximum and a minimum speed, or full stop.

Subsequently, the batch target 106 may be replaced by a new batch target 106. The weight measuring means 108 may be calibrated in between two batches.

The use of a proportional controller in the control unit 110 may be improved by either:
i) Providing a proportional and derivative controller instead of the proportional controller. By the use of a proportional and derivative controller neither the ramp-function nor the overshot compensation and/nor in-flight compensation is necessary in order to improve the accuracy. A proportional and derivative controlled system may give a shorter weighing time than the proportional controlled system using a ramp-function; or
ii) Adding a ramp-function and overshot compensation to the proportional controller to provide a more accurate weight.

Hence, a difference between the system 100 of Fig. 1 and the system 200 of Fig. 5 is that a derivative controller may provide an in-flight compensation, or that in-flight compensation may be achieved by other means. Whereas there is no need for in-flight compensation in the system 100 as the reduced weight of the supply 102 is continuously measured. Hence, the systems 100, 200 represent two interrelated products with alternative solutions to the same problem.

The system(s) may further comprise sensor and detectors for ensuring that the operations are performed correctly. For example, spillage of grain and/or powder may be detected. These sensors and detectors may be coupled to a second control unit (not shown) which is also connected wired or wirelessly to other processes upstream or downstream of the batching process. Thereby, operation may be halted if a malfunction is detected. The first and/or second control unit may further comprise a human-machine-interface, or be connected via a wired or wireless network for receiving instructions or adapting the operation of the system to another type or variant of powder and/or grains. Further, the systems can comprise means for removing batches batchwise to further processes downstream. In addition, the system can include means for closing containers that has reached the predetermined weight.

The skilled person realizes that a number of modifications of the embodiments described herein are possible without departing from the scope of the invention, which is defined in the appended claims.

## Claims

1. A system (100) for dosing powder or grain in a batch process, the system comprising:
- a continuously variable feeder (104) connected to a supply (102) of powder or grain for supplying powder or grain from said supply to a batch target (106);
- weight measuring means (108) for measuring the weight of the supply (102); and
- a proportional controller (110) connected to the continuously variable feeder (104) and the weight measuring means (108);
wherein said proportional controller (110) is adapted to control said continuous variable feeder (104) on the basis of a weight signal from said weight measuring means (108) such that said batch target (106) reaches a predetermined weight.

2. The system (100) according to claim 1, wherein the proportional controller (110) further comprises a derivative component.

3. The system (100) according to claim 1 or 2, further comprising a ramp function for said proportional controller (110).

4. The system (100) according to any of the preceding claims, further comprising means for overshot compensation.

5. The system (100) according to any of the preceding claims, further comprising adjustment means for adjusting the speed of the continuously variable feeder to adjust for differences in feeding powder or grain.

6. A method for dosing powder or grain in a batch process, the method comprising the steps of:
- continuously measuring the weight of a supply (102) using weight measuring means (108) to provide a weight signal indicative of the weight of the supply (102); and
- controlling a continuously variable feeder (104) connected to the supply of powder or grain using a proportional controller (110) connected to the continuously variable feeder (104) based on the weight signal such that a batch target (106) reaches a predetermined weight.

7. The method according to claim 6, further comprising the step of providing a derivative component for said proportional controller (110).

8. The method according to claim 6 or 7, further comprising the step of providing a ramp function for the proportional controller (110).

9. The method according to any one of claims 6-8, further comprising the step of providing an overshot compensation for said proportional controller (110).

10. A system for dosing powder or grain in a batch process, the system comprising:
- a continuously variable feeder (104) connected to a supply (102) of powder or grain for supplying powder or grain from said supply to a batch target (106);
- weight measuring means (108) for measuring the weight of the batch target (106); and
- a proportional controller (110) connected to the continuously variable feeder (104) and the weight measuring means;
wherein said proportional controller (110) is adapted to control said continuous variable feeder (104) on the basis of a weight signal from said weight measuring means such that said batch target (106) reaches a predetermined weight.
